# EUROPEAN PATENT SPECIFICATION

(11) **EP 3 321 795 B1**
(45) Date of publication and mention of the grant of the patent: **05.05.2021**
(21) Application number: 16198609.6
(22) Date of filing: 14.11.2016
(51) Int. Cl.: A63F 13/5372, A63F 13/54, G06F 3/0481, G06F 3/0482, G06F 3/01, G06F 3/16

(54) **A METHOD AND ASSOCIATED APPARATUSES**
EIN VERFAHREN UND ZUGEHÖRIGE VORRICHTUNGEN
UNE MÉTHODE ET LES APPAREILS ASSOCIÉS

(43) Date of publication of application: 16.05.2018
(73) Proprietor: Nokia Technologies Oy, 02610 Espoo (FI)
(72) Inventor: LEPPÄNEN, Jussi, 33580 Tampere (FI); LEHTINIEMI, Arto, 33880 Lempäälä (FI); ERONEN, Antti, 33820 Tampere (FI); ARRASVUORI, Juha, 33100 Tampere (FI)
(74) Representative: Kolster Oy Ab

(56) References cited:
- US-A1- 2010 069 153
- US-A1- 2011 193 773
- US-A1- 2016 188 181
- SUSAL JOEL ET AL: "Immersive Audio for VR", CONFERENCE: 2016 AES INTERNATIONAL CONFERENCE ON AUDIO FOR VIRTUAL AND AUGMENTED REALITY; SEPTEMBER 2016, AES, 60 EAST 42ND STREET, ROOM 2520 NEW YORK 10165-2520, USA, 21 September 2016 (2016-09-21), XP040681042,

## Description

### Technical Field

The present disclosure relates to the field of control of audio, associated methods, computer programs and apparatus. Certain disclosed aspects/examples relate to a virtual reality apparatus, a virtual reality content capture device, a portable electronic devices, in particular, virtual reality headsets/glasses, so-called hand-portable electronic devices which may be hand-held in use (although they may be placed in a cradle in use). Such hand-portable electronic devices include so-called Personal Digital Assistants (PDAs), mobile telephones, smartphones and other smart devices, smartwatches and tablet PCs.

The portable electronic devices/apparatus according to one or more disclosed aspects/embodiments may provide one or more audio/text/video/data communication functions (e.g. tele-communication, video-communication, and/or text transmission (Short Message Service (SMS)/Multimedia Message Service (MMS)/e-mailing) functions), interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture functions (e.g. using a (e.g. in-built) digital camera), and gaming functions.

### Background

The capture of virtual reality content is becoming more common, with virtual reality content producers producing different types of virtual reality content. For example, the virtual reality content may be created from panoramic or omni-directionally captured views of the real world, such as at events such as sporting events, concerts or other performances. Further, in virtual reality, such as that provided by immersive video content, which provides a field of view greater than can be viewed at any one time, the particular focus of a user's virtual reality view may be more varied as they can have different viewing directions while the content is being watched. The virtual reality content may have multiple audio tracks available. Those audio tracks may comprise one or more of commentary provided by professional commentators, commentary provided by persons at the event, commentary provided by persons watching the content of the event, commentary directed to the event in general, commentary that has a specific focus such as directed towards a person, object or occurrence at the event, as well as audio of the ambient sounds recorded at the event. Providing content, such as virtual reality content, in which audio content is controllable may be important.

SUSAN JOEL et al.: "Immersive Audio for VR", Conference: 2016 AES International Conference On Audio for Virtual and Augmented Reality; September 2016, AES, 60 East 42nd Street, Room 2520 New York 10165-2520, USA, 21 September 2016 (2016-09-21) discloses immersive audio for virtual reality (VR). The paper presents a review of different alternatives to deliver immersive audio for VR, contrasting physically-based and artistic-based approaches, and overview of audio content creation for VR.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

In a first example aspect there is provided an apparatus according to independent claim 1.

In one or more examples, the content comprises virtual reality content and the view provided to the user comprises a virtual reality view providing for viewing of the video imagery of the virtual reality content in virtual reality. Accordingly the selector-graphic may be provided for display in the virtual reality view. In one or more examples, the selector-graphic may be provided for display in an augmented reality view and the content may be displayed in the augmented reality view or on a separate display wherein the augmented reality view augments the content displayed in the separate display.

In one or more examples, the plurality of audio track comprises at least one of audible content related to occurrences to the video imagery; sound effects to accompany the video imagery; and music that accompanies the video imagery. In one or more examples, each audio track that is associated with a focus-subject includes associated data to identify the focus-subject in the video imagery. In one or more examples, one or more of the audio tracks are related to the video imagery in general rather than to a specific focus-subject viewable in the content. These "general" audio tracks may include data to identify them as such.

In one or more examples, the plurality of audio tracks all have a focus-subject and the apparatus is caused to, on selection of one or more of the audio tracks for audible presentation to the user, provide for mixing of the selected one or more audio tracks with an audio track that does not have a focus-subject.

In one or more examples, the selector-graphic is provided for display to follow the position of the particular focus-subject as it appears in the video imagery presented in the view.

In one or more examples, wherein the at least two audio tracks comprise the at least one audio track that is associated with a focus-subject viewable in the content and the other of the at least two audio tracks comprise one or more of;
i) an audio track that comprises audio content that is not associated with a focus-subject;
ii) an audio track that comprises audio content that is ambient sound of the event; and
ii) an audio track that comprises audio content that is associated with a different focus-subject viewable in the content.

In one or more examples, the focus-subject comprises one or more of a person, object or occurrence appearing in the video imagery.

In one or more examples, the apparatus is caused to provide, based on the particular focus-subject, for determination of which of the plurality of audio tracks have a focus-subject that comprises the particular focus-subject and provide for display of selectable selector-graphic elements for a subset of the plurality of audio tracks comprising at least those determined audio tracks and wherein the subset excludes those audio tracks that are associated with a focus-subject that is not the particular focus-subject.

In one or more examples, the subset includes one or more audio tracks of the plurality of audio tracks that are not associated with a focus-subject.

In one or more examples, the selector graphic is displayed as a ring that surrounds the focus-subject and the selector-graphic element comprise a sector of the ring.

In one or more examples, the apparatus is caused to provide for selection of one or more of the audio tracks for audible presentation to the user on virtual rotation of the selector graphic, the orientation of the selector graphic and therefore the orientation of the selector graphic elements determinative of the audio track for audible presentation to the user.

In one or more examples, the apparatus is caused to provide for automatic changing of a current playing audio track represented by one of the selector-graphic elements to another audio track represented by one of the selector-graphic elements based on determination that an audio volume level of the current audio track is below a predetermined volume threshold for longer than a predetermined period of time.

In one or more examples, the relative arrangement of the selector-graphic elements of the selector graphic corresponds to a spatial audio effect applied to the audio tracks represented by the selector-graphic elements.

In one or more examples, the apparatus is caused to provide for audible presentation of an audio track represented by one of the selector-graphic elements of the selector graphic in one or more of the following relative arrangements:
i) an audio track represented by an selector-graphic element on a left side of the selector graphic is provided with a spatial audio effect such that it is perceived as originating on a left side of the user;
ii) an audio track represented by an selector-graphic element on a right side of the selector graphic is provided with a spatial audio effect such that it is perceived as originating on a right side of the user;
iii) an audio track represented by an selector-graphic element at a central position relative to the selector graphic is provided with a spatial audio effect such that it is perceived as originating centrally relative to the user.

In one or more examples, the apparatus is caused to provide for display of the selector-graphic, comprising a first selector-graphic, in the view and a second selector-graphic in the view that is also visually associated with the particularfocus-subject and includes a plurality of selectable selector-graphic elements, each selector-graphic element representative of one of the audio tracks;
the first selector graphic comprises an audibly active selector in that audio tracks corresponding to one or more of the selector-graphic elements provided as part of the first selector graphic are audibly presented to the user; and the second selector graphic comprises an audibly inactive selector in that audio tracks corresponding to the selector-graphic elements
provided as part of the second selector graphic are not audibly presented to the user; and wherein the apparatus is caused to provide for user initiated virtual movement of the selector-graphic elements between the first and second selector-graphic elements to control their audible presentation to the user.

In one or more examples,
the first selector-graphic comprises, at least initially, selector-graphic elements representative of audio tracks of a first categorized type; and
the second selector-graphic includes selector-graphic elements representative of audio tracks of a second categorized type.

In one or more examples, the first categorized type is defined by predetermined data, such as metadata, associated with the audio track. Wherein the first categorized type comprises professional commentary provided as part of the content. Wherein the second categorized type comprises audio tracks generated by users who have created audio tracks while watching the content.

In one or more examples, the apparatus provides for audible presentation of ambient sounds from the event and based on movement of a selected one of the selector-graphic elements of the second selector graphic to place it within the first selector graphic, provide for audible presentation of the audio track represented by the selected one of the selector-graphic elements with a spatial audio effect such that the audio of the audio track is perceived as originating from a particular direction; and
wherein the ambient sounds that have a direction common with the particular direction are at least one of;
i) removed from audible presentation to the user;
ii) have a spatial audio effect applied thereto such that they are perceived as originating from a direction adjacent to the particular direction.

In one or more examples, the apparatus is caused to provide for recording of a user audio track for association with the content based on audio provided by the user who is provided with the view, the apparatus caused to identify the focus-subject of the user audio track based on a determined eye gaze direction and the view provided to the user.

According to a second aspect we provide an apparatus according to independent claim 13.

Accordingly, in one or more examples, the user may be providing the audio while watching the event live or watching the captured content (e.g. VR content) of the event and in either case, the direction of the eye gaze of the user is used to identify an object, person or occurrence that may comprise the focus-subject of the audio track. In one or more examples the content comprises virtual reality content.

In one or more examples, based on the eye gaze direction the apparatus may be caused to identify an object, person or occurrence in the video imagery to comprise the focus-subject by one or more of;
i) visual analysis of the video imagery;
ii) audio analysis of directional audio associated with the video imagery;
iii) analysis of the location of positioning devices associated with one or more objects, persons or occurrences viewable in the video imagery.

Thus, in one or more examples, the apparatus may provide for visual identification of objects, people or occurrences whose position in the video imagery correlates with the gaze direction. For example, the movement of a person identified by visual analysis may correlate with movement of the gaze direction and it may be concluded that the audio of the user is about that person. In one or more examples, the apparatus may provide for audio analysis of directional audio to identify the direction of one or more sounds and correlation between the gaze direction and the one or more sounds may provide for the identification of an object, person or occurrences as the focus-subject. For example, an exchange between two actors may provide two slightly separated sound sources and correlation between the sound sources and the gaze direction may identify the exchange between the actors, i.e. an "occurrence" of a verbal exchange, as the focus-subject. For example, objects and/or persons may be provided with positioning devices such that their location in the video imagery is determinable and the apparatus may provide for identification of objects, people or occurrences whose position in the video imagery, from the positioning devices, correlates with the gaze direction.

In all of the above examples, a user may not fix their gaze on a same person, object or occurrence for the whole time and therefore the apparatus may be caused to identify an object, person or occurrence in the video imagery as the focus-subject based on a threshold time (or proportion of a total time that audio is provided) that the gaze direction falls upon that object, person or occurrence.

According to a third aspect we provide a method according to independent claim 14.

According to a fourth aspect we provide a computer readable medium according to independent claim 15.

The above summary is intended to be merely exemplary and non-limiting.

### Brief Description of the Figures

A description is now given, by way of example only, with reference to the accompanying drawings, in which:
figure 1 illustrates an example apparatus embodiment comprising a number of electronic components, including memory and a processor, according to one embodiment of the present disclosure;
figure 2 illustrates an example virtual reality view of an event including a focus-subject that comprises the particular focus-subject and a selector graphic;
figure 3 illustrates the example virtual reality view of figure 2 with a second selector graphic; figure 4 shows a selector graphic in which adding audio tracks has replaced the ambient audio in the audio space;
figure 5 shows a selector graphic in which adding audio tracks has spatially compresses the ambient audio in the audio space;
figure 6 illustrates an example apparatus embodiment comprising a number of electronic components, including memory and a processor, according to one embodiment of the present disclosure;
figure 7 illustrates a flowchart according to an example method of the present disclosure;
figure 8 illustrates schematically a computer readable medium providing a program;

### Description of Example Aspects

Example embodiments described herein may relate to content comprising virtual reality content. For virtual reality content, the spatial extent of virtual reality content is typically large and may be displayed such that only a part of the total spatial extent of the virtual reality content is displayed to a user at any one time, such that a user is required to look around to view the entire spatial extent of the virtual reality content. One or more embodiments may relate to content comprising conventional video imagery, such as for display on a television, projector screen or other visual display, in which the whole spatial extent of the video imagery may be provided for display at the same time. One or more embodiments may relate to content comprising video imagery for display on a visual display in combination with an augmented reality display configured to augment the video imagery provided on the visual display.

Virtual reality (VR) may use a VR display comprising a headset, such as glasses or goggles or virtual retinal display, or one or more display screens that surround a user to provide the user with an immersive virtual experience. A virtual reality apparatus, using the VR display, may present multimedia VR content representative of the event to a user to simulate the user being virtually present at the event. The event may comprise a sporting event, a theatre production, a movie, a musical performance or any other event. The virtual reality content may replicate a real world event to simulate the user being physically present at a real world location or the virtual reality content may be computer generated or a combination of computer generated and real world multimedia content. The virtual reality content may be provided by a video imagery such as a panoramic video (such as a panoramic live broadcast or pre-recorded content), comprising a video having a wide or 360° field of view (or more, such as above and/or below a horizontally oriented field of view). The user may then be presented with a VR view of the event and may, such as through movement of the VR display, move the VR view to look around the event.

The VR content provided to the user may comprise live or recorded images of the real world, captured by a VR content capture device, for example. As the VR content is typically larger than a portion a user can view with the VR display, the VR apparatus may provide for panning around of the VR view based on movement of a user's head or eyes. For example, the field of view in the horizontal plane of a VR display may be about 120° but the VR content may provide 360° video imagery. Thus, the field of view of the VR view provided by the VR display is less than the total spatial extent of the VR content.

The event may be captured by cameras for presenting live or recording and presenting later to other users. The event may be captured for display in virtual reality, which includes augmented reality, and therefore the user consuming the virtual/augmented reality content may be able to look around the event and may select different audio tracks to listen to and/or create an audio track for the VR content. A VR content capture device may be configured to capture VR content for display to one or more users. A VR content capture device may comprise one or more cameras and one or more (e.g. directional and/or ambient) microphones configured to capture the surrounding visual and aural scene from a point of view. An example VR content capture device is a Nokia OZO camera of Nokia Technologies Oy. Thus, a musical performance or sporting event may be captured (and recorded) using a VR content capture device, with the performers/sportspeople moving around it or from the point of view of an audience member. In each case a consumer of the VR content may be able to look around using the VR display of the VR apparatus to experience the event from the point of view of the capture location as if they were present and see the various people, objects and occurrences that may have audio tracks about them. The effective making of and control of audio tracks for content, whether VR content or conventional 2D or 3D effect video, of an event may be desirable.

Augmented reality comprises at least the presentation of graphics overlaid over a view of the real world. Augmented reality may be provided by augmented reality glasses, retina projector or other augmented reality headset for providing a combined view of the real-world and augmented reality graphics.

A smart TV may be configured to overlay graphics over video imagery it displays.

For a particular event, there may be a plurality of different audio tracks available. For example, for a theatre production or movie, there may be the actor/actress dialogue as a first audio track, a director's commentary as a second audio track. In one or more examples, one or more audio tracks commenting about the performance of the individual actor/actress may be provided as an audio track and in one or more examples, an audio track may be provided of the thoughts of a character in a movie to provide an added level of interest for the viewer. Thus, some of the audio tracks may relate to the event in general and others may be have a specific focus such as being directed towards or about an object, person or occurrence. For a sporting event, there may be commentary from different sources such as different professional commentators, or in different languages, or commentary specifically about one or more players or sportspeople participating in the sporting event. Thus, some of the audio tracks may be about particular players appearing in the content. For content comprising virtual reality content, the focus of the commentary or audio in general may be in different viewing directions, which may or may not be in the current viewing direction of the user. The focus of the commentary or, more generally, the audio track may be directed to a particular person, object or occurrence at the event. The audio tracks may be provided at the time of production of the content or may be provided by users creating audio tracks while watching the content.

Knowledge of the location of each person, object or occurrence may be obtained by using transmitters/receivers or identification tags to track their position, such as relative to the VR content capture device, in the scene captured by the VR content capture device.

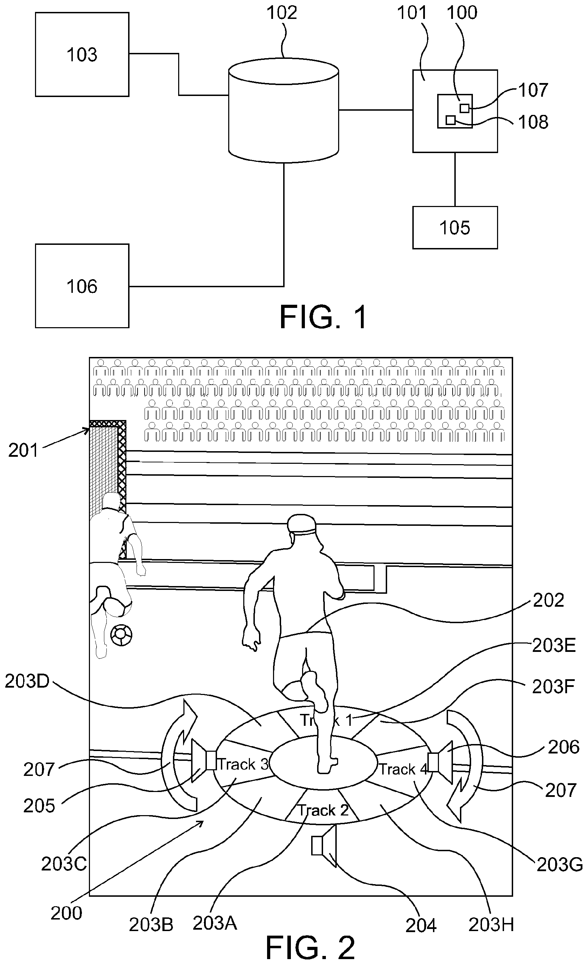

An example apparatus 100 of Figure 1 is configured to provide for display of a selector-graphic 200 (Figure 2) in the virtual reality view 201 that is visually associated with a particular focus-subject 202 (i.e. the football player) and includes a plurality of selectable selector-graphic elements 203A-H, each selector-graphic element representative of one of a plurality of audio tracks. While the examples described herein relate primarily to content comprising VR content and the selector-graphic 200 being provided for display in the VR view 201, the principles illustrated by the examples herein may be equally applied to content comprising conventional video imagery (whether 2D or with a 3D, such as by way of a stereoscopic effect). In one or more examples, the apparatus 100 may be configured to provide for display of a selector-graphic 200 in the (conventional, i.e. on a television or other visual display) view of the content that is visually associated with a particular focus-subject 202. Thus, the apparatus 100 may be associated with, in communication with or part of a smart television for example. In one or more examples, the apparatus 100 may be configured to provide for display of a selector-graphic 200 in an augmented reality (AR) view (by way of augmented reality glasses or headset, for example) and wherein the selector-graphic 200 provided in augmented reality is visually associated with a particular focus-subject 202 provided for display on a conventional television or other visual display. Thus, the apparatus 100 may be associated with, in communication with or part of an augmented reality apparatus, for example. However, the description that follows will focus on the example embodiment in which the content comprises VR content.

The apparatus 100 may form part of or be in communication with a VR apparatus 101 for presenting VR content to a user. The apparatus 100 may perform the display of the selector-graphic or it may provide signalling to another component that actually generates and/or renders the necessary graphics for display by the VR apparatus 101. A store 102 is shown representing the VR content stored in a storage medium or transiently present on a data transmission bus as the VR content is captured and received by the VR apparatus 101. The VR content is captured by at least one VR content capture device 103. A user or commentator may use a VR headset 105 or other VR display to view the VR content and provide for selection of audio tracks and/or record audio tracks for the VR content. Information representative of the location of objects, persons or occurrences at the event may be part of or accompany the VR content and may be provided by a location tracking element 106.

The apparatus 100 is configured to provide for selection of one or more of the audio tracks for audible presentation to the user. The apparatus 100 may, in addition or alternatively, provide for recording of audio to form an audio track for association with virtual reality content and a particular focus-subject 202.

In this embodiment the apparatus 100 mentioned above may have only one processor 107 and one memory 108 but it will be appreciated that other embodiments may utilise more than one processor and/or more than one memory (e.g. same or different processor/memory types). Further, the apparatus 100 may be an Application Specific Integrated Circuit (ASIC). The apparatus 100 may be separate from and in communication with the VR apparatus 101 or, as in Figure 1, may be integrated with the VR apparatus 101.

The processor 107 may be a general purpose processor dedicated to executing/processing information received from other components, such as VR apparatus 101 and location tracking element 106 in accordance with instructions stored in the form of computer program code on the memory. The output signalling generated by such operations of the processor is provided onwards to further components, such as VR apparatus 101 (or AR apparatus or smart TV) or to a VR content store 102 for recording an audio track for association with the VR content.

The memory 108 (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood to, in one or more example embodiments, provide an active coupling between the processor and the memory to allow the processor to access the computer program code stored on the memory.

In this example the processor 107 and the memory 108 are all electrically connected to one another internally to allow for electrical communication between the respective components. In this example the components are all located proximate to one another so as to be formed together as an ASIC, in other words, so as to be integrated together as a single chip/circuit that can be installed into an electronic device. In other examples one or more or all of the components may be located separately from one another.

Figure 2 shows the virtual reality view 201 which comprises a spatial portion of the video imagery that comprises part of the VR content. A user may use the headset to view the virtual reality view and, such as based on movement of their head and headset, change the viewing direction of the virtual reality view 201. In this example, the VR content comprises video imagery of a football game, but in other examples it may comprise augmented reality, computer generated content or combinations thereof. In this example, the user happens to have oriented the virtual reality view to include the player 202. The VR content may include a plurality of focus-subjects for which an audio track is available and only one, some or all of them may be visible in the VR view 201 at any one time. The term "particular focus-subject" is used to refer to at least one of the focus-subjects that is visible in the current VR view and for which the selector graphic 200 is therefore provided. In this example, the particular focus-subject for this virtual reality view is the player 202.

While in this example the focus-subject comprises a person (player 202), in other examples it may comprise an object, such as a car in VR content of a car race or a dog in VR content of sheep dog trials. In other examples, it may comprises an occurrence, such as a dialogue between two or more actors/actresses or a chase sequence in an action movie. In summary, the focus-subject may be any one of a person, object or occurrence that is viewable in the VR content and for which an audio track about that focus-subject may be available to listen to.

As mentioned above, the VR content (or, in other embodiments, conventional video imagery) may include or have associated therewith a plurality of audio tracks. An audio track may comprise a portion of audio that is associated with the visual content of the VR content. In one or more examples, the plurality of audio tracks comprise at least one of audible content related to event in the video imagery; sound effects to accompany the video imagery; and music that accompanies the video imagery. The audio tracks may include ambient audio tracks, such as the sounds of the football game being played, or the dialogue and background sounds of a movie. The audio tracks may include commentary audio tracks, such as the professional commentary that accompanies the football game or user-generated content commentary about the football game. Further, the audio tracks may relate to the VR content in general, such as general commentary about the whole football game, or a director talking about the motivation behind various scenes of a movie in a commentated extra feature. The audio tracks may relate to specific things referred to herein as focus-subjects viewable in the VR content. Thus, one or more of the audio tracks may be about a particular focus-subject appearing in the VR content, for example, there may be commentary about a specific player of the football game or a specific actor in a movie, or a particular car in a race. Audio tracks may have a focus-subject or the same focus-subject for only a portion of their running time. For example, the audio track may change focus-subject at a point during its running time. The focus-subject of an audio track may be defined by one or more of metadata, information that accompanies the audio track and semantic analysis of the audio track. Accordingly, the apparatus 100 may receive information about the plurality of audio tracks available along with the focus-subject for each audio track or the apparatus 100 or another apparatus may determine what the focus-subject is by one or more of the above techniques.

Thus, in respect of virtual reality content comprising video imagery of an event, such as a football game, there may be one or more persons (or objects or occurrences) that may be the focus of commentary that may form one or more audio tracks associated with the virtual reality content. Accordingly, there may be many audio tracks that a viewer of the VR content may listen to. However, listening to all at once may be confusing or unwanted. The apparatus 100 may provide for selection of audio tracks and, in particular, selection of audio tracks that may be associated with the particular focus-subject currently viewable in the VR view 201. The apparatus 101 may provide signalling to the VR apparatus 101 or other component configured to manage the plurality of audio tracks to audibly present a selected audio track to the user. The selected audio tracks may be mixed using an audio mixing technique with any already-presented audio and/or may be presented within a predetermined audio-spatial region by way of a 3D spatial audio effect, such that the audio track is perceived to come from a specific direction. Audio that is already being presented may be shifted in audio-spatial region to make way for the selected audio track.

It will be appreciated that Figure 2 could equally illustrate a view provided by a conventional television display or other visual display, for example. Thus, a smart TV may provide the view 201 and overlay the selector graphic 200. Likewise, Figure 2 could illustrate the overlaid views of a conventional television display, or other visual display showing the view 201 of the football game and an augmented reality display showing selector graphic 200.

The apparatus 100 may be configured to provide for display, at least some of the time, of the selector graphic 200 based on the plurality of audio tracks associated with the virtual reality content, where at least one of the audio tracks is associated with a focus-subject viewable in the virtual reality content (e.g. one of the plurality of players on the football pitch) and wherein the audio content of the at least one audio track is at least in part about the focus-subject (i.e. the content, such as whatever is spoken or provided as musical accompaniment, is about the focus-subject). In the present example, there may be an ambient sound audio track of the football game being played, a professional, general, unfocussed, commentary audio track and a plurality of audio tracks about the player 202, some of which may be professionally created (such as by the producer of the VR content) and others may comprise user-generated content, such as by fans of the football team to which player 202 belongs.

The apparatus 100 may be configured to provide for display of the selector graphic 200 based on a user input or an expected user input to the selector graphic 200 and otherwise hidden from display, such as when the user is just watching the video imagery. In one or more examples, the apparatus 100 may be configured to provide for display of the selector graphic 200 in response to a request user input, such a request to show audio tracks that are available for selection. In one or more examples, the apparatus 100 may be configured to detect user movement or a user gesture towards a user input means, which may be interpreted as an expected user input to the selector graphic 200, and therefore, in response thereto, provide for display of the selector graphic 200.

The apparatus 100 may provide for determination of a subset of audio tracks of the plurality of audio tracks associated with the VR content that may be selectable by way of the selector graphic 200. In particular, the audio tracks available may relate to focus-subjects that may be or may not be visible in a current VR view 201. Thus, based on a particular focus-subject 202 that is visible in the current VR view 202, the apparatus 100 may provide for determination of which of the plurality of audio tracks have a focus-subject that comprises the particular focus-subject for inclusion in the subset. Further audio tracks that do not have a focus-subject, such as general commentary, may be included in the subset. Audio tracks that have a focus-subject but the focus-subject associated with the audio track is not the particular focus-subject currently viewable in the VR view 201 may be excluded from the subset. In other examples, the one or more audio tracks that do not have a focus-subject, such as ambient sounds or general commentary may be audible by default and not included for selection by the selector graphic 200 or may be selectable by a different means. For example, the selector graphic 200 may be provided primarily or solely for selection of audio tracks that have a focus-subject comprising the particular focus-subject.

The selector-graphic 200 is provided at the base of the focus-subject 202 in the virtual reality view such that is visually associated with the particular focus-subject. If implemented in augmented reality, the apparatus may provide for alignment of the augmented reality graphic of the selector graphic 200 with the user's view of the particular focus-subject on a display.

The VR apparatus 101 may provide signalling to the apparatus 100 to indicate where in the video imagery the user is looking (i.e. what VR view they are provided with) such that one or more focus-subjects that are currently viewable can be identified. The particular focus-subject may be identified in the video imagery of the current VR view by one or more of an image analysis technique, use of depth information of the scene (such as from the VR content capture device 103), predetermined data that identifies the location of focus-subjects (or potential focus-subjects) and analysis of directional "3D" audio (to identify a dialogue for example). Accordingly, the apparatus 100 may identify the particular focus-subject or information (such as a position in the video imagery) may be provided to the apparatus 100 that enables the display of the selector graphic 200 such that it is associated with the particular focus-subject. In one or more examples, the selector graphic 200 may be located elsewhere in relation to the particular focus-subject 202. In one or more examples, the selector graphic 200 may be presented overlaying, to the side of, above or below the particular focus-subject 202 or at an edge of the VR view 201. A graphical element or an animated graphical element may be provided such that said selector graphic 200 is visually associated with the particular focus-subject. It will be appreciated that the VR view 201 may change as the video imagery progresses as well as when the user causes the VR view 201 to change by moving their head (or by other means). In one or more examples, the selector-graphic 200 is provided for display to follow the position of the particular focus-subject as it appears in the video imagery presented in the virtual reality view.

In examples where a plurality of particular focus-subjects are visible in the same VR view 202, a plurality of selector graphics 200 may be provided for each of the particular focus-subjects that are visible, and wherein each selector graphic provides for selection of audio tracks that are associated with that particular focus-subject.

In this example the VR content happens to be associated with seven audio tracks listed in the table below.

| Audio track | Focus-subject | Description |
|---|---|---|
| 1 | None | Primary Commentary |
| 2 | Player 3 | Professional commentary |
| 3 | Player 3 | Commentary from user "super_fan_1" |
| 4 | Player 3 | Commentary from user "footycrazy" |
| 5 | Player 5 | Professional commentary |
| 6 | None | Commentary of the match from a radio station |
| 7 | None | Primary ambient audio |

The audio tracks may be categorised as one or more of;
i) an audio track that comprises audio content that is not associated with a focus-subject (audio tracks 1, 6 and 7 in the table);
ii) an audio track that comprises audio content that is ambient sound of the event (audio track 7 in the table); and
iii) an audio track that comprises audio content that is associated with the particular focus-subject currently viewable in the virtual reality content (audio tracks 2, 3 and 4 in the table); and
iv) an audio track that comprises audio content that is associated with a different focus-subject that is viewable in the virtual reality content but not in the current VR view (audio track 5 in the table).

The selector graphic 200 may be provided to allow for selection (and de-selection) of audio tracks only in category iii. However, it may additionally provide for selection (and de-selection) of one or more of audio tracks in categories i and ii.

Accordingly the apparatus 100 may be caused to provide, based on the particular focus-subject 202, for determination of which of the plurality of audio tracks (audio tracks 1 to 7) have a focus-subject that comprises the particular focus-subject (audio tracks 2, 3, 4) and provide for display of the selectable selector-graphic elements 203A-H for a subset of the plurality of audio tracks comprising at least those determined audio tracks and wherein the subset excludes those audio tracks that are associated with a focus-subject that is not the particular focus-subject (audio tracks 5). In one or more examples, the subset may include one or more audio tracks of the plurality of audio tracks that are not associated with a focus-subject (audio tracks 1, 6 and 7). In one or more examples, the audio track 7, comprising ambient audio of the event may not be selectable or de-selectable by the selector graphic 200 and may, in one or more examples always be audibly presented.

The selector graphic may be displayed as a ring or carousel that surrounds the focus-subject 202 and each selector-graphic element 203A-H may comprise a sector of the ring.

A user watching the VR content may select one or more audio tracks to listen to by virtual rotation of the ring shaped selector graphic, similar to the rotation of a carousel. For example, the apparatus 100 may be configured to determine which selector-graphic element is in a specific position on the ring, such as nearest to the viewpoint of the VR view (in this case selector-graphic element 203A designating audio track 2) and provide for audible presentation of that audio track to the user. Accordingly, the audible presentation of the audio tracks presented as selector-graphic elements may be based on the orientation of the user rotatable selector graphic.

In the example shown in Figure 2, several positions on the ring correspond to positions in which the positioning of the selector-graphic elements will cause the corresponding audio track to be played. An additional "active track" marker 204, 205, 206 is provided for display (such as based on signalling from apparatus 100) at fixed locations relative to the rotatable selector graphic 200. Alignment between the selector-graphic elements 203A, 203C and 203G and the active track markers 204, 205 206 provide for selection of the audio tracks the selector-graphic elements represent. Accordingly, the apparatus 100 may provide for audible presentation of the selected audio tracks. Arrows 207 show how the selector graphic 200 may be displayed such that it appears to rotate, along with the selector-graphic elements 203A-H, on user manipulation input.

In one or more examples the apparatus 100 may be configured to provide for automatic changing of a current playing audio track represented by one of the selector-graphic elements, such as 203G, to another audio track represented by one of the selector-graphic elements, such as 203E (a not currently played track), based on determination that an audio volume level of the current audio track (audio track 4) is below a predetermined volume threshold for longer than a predetermined period of time. The volume threshold may be based on a level that distinguishes silence from the audio content taking account of the volume levels of the content. The threshold time may be the time of continuous "silence" allowed before changing/removing the currently played audio track. Thus, the apparatus 100 may monitor or provide for monitoring of the content of the audio tracks and based on the monitoring provide for changing of the audio tracks and/or their removal from being represented on the selector graphic 200. For example, if nothing is being spoken on the commentary from user "footycrazy" of audio track 4, the apparatus 100 may change the currently played audio track from track 4 to a different track and/or remove track 4 from the selector graphic. For audio tracks that may include silence for long periods, this may be advantageous. A graphic showing the audio level output may be shown next to each selector-graphic element so silent audio tracks may be identified for a user.

In one or more examples, the VR apparatus 101 may be capable of presenting spatial audio in which the audio is presented with an audio effect such that it is perceived by a user as originating from a particular direction or location. The apparatus 100 may be configured such that the relative arrangement of the selector-graphic elements 203A-H of the selector graphic corresponds to the spatial audio effect applied to the audio tracks represented by the selector-graphic elements. Accordingly, the apparatus 100 may be caused to provide for audible presentation of an audio track represented by one of the selector-graphic elements of the selector graphic in one or more of the following relative arrangements:
i) an audio track represented by a selector-graphic element, e.g. 203C, on a left side of the selector graphic 200 is provided with a spatial audio effect such that it is perceived as originating on a left side of the user;
ii) an audio track represented by an selector-graphic element on a right side, e.g. 203G, of the selector graphic is provided with a spatial audio effect such that it is perceived as originating on a right side of the user;
iii) an audio track represented by an selector-graphic element, e.g. 203A, at a central position relative to the selector graphic 200 is provided with a spatial audio effect such that it is perceived as originating behind and centrally relative to the user.

Further, in the present example, the selector graphic 200 is divided into eight sectors and therefore the apparatus 100 may provide for eight spatial audio zones. The position of the selector graphic element on the selector graphic may corresponding to the direction from the corresponding audio track is presented using the spatial audio effect. Spatial audio effects may use timing differences and volume differences between the audio presented to the left and right ears of a user (on left and right audio channels) to achieve the perception that the audio originated from a particular direction. For example, when generating audio to a binaural format suitable for headphone listening, the system may use appropriate head-related-transfer-function (HRTF) filters to process a sound so that it appears to emanate from a specific direction with respect to the listener's head. When generating audio to a loudspeaker format such as 5.1, the system may utilize amplitude panning techniques such as vector-base-amplitude-panning (VBAP) to calculate the gains for the signal for different loudspeakers, so that the signal is appropriately panned between a pair of loudspeakers in a 2D loudspeaker configuration or inside a triplet of loudspeakers in a 3D loudspeaker configuration.

The selector-graphic elements 203A-H may be labelled or otherwise provided with a description of the audio track they represent. For example, the selector-graphic elements may be provided with the description as listed in the above table. Accordingly, it may be possible for a user to "discover" audio track sources that they prefer or particular users who provide user-generate content that they wish to follow. The apparatus may provide for display of a designator of the source of the audio track in associated with the selector graphic 200. The apparatus may provide for display of a textual description of the audio track in associated with the selector graphic 200.

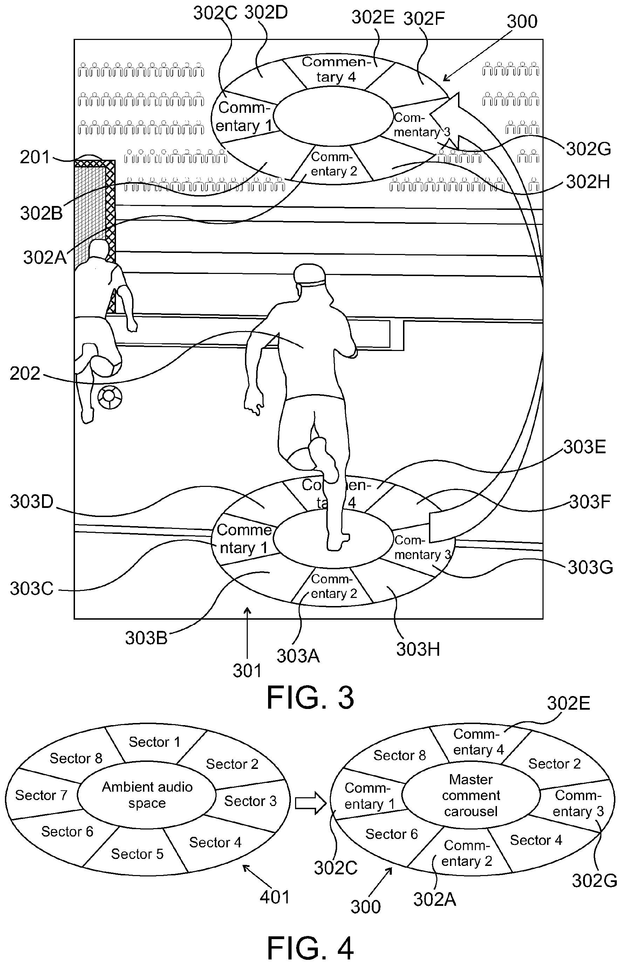

As shown in Figure 3, in one or more examples, a first selector graphic 300 may be provided as well as a second selector-graphic 301 in the virtual reality view 201 that is also visually associated with the particular focus-subject. Both the first selector graphic 300 and the second selector graphic 301 may each include a plurality of selectable selector-graphic elements 302A-H and 303A-H respectively, wherein each selector-graphic element is representative of one of the plurality of audio tracks associated with the virtual reality content and, in particular, the particular focus-subject with which the selector graphic are visually associated.

The first selector graphic 300 may include professionally created audio track content, such as content created by the producer of the VR content or affiliates thereof and the second selector graphic 300 may include user-generated content. It will be appreciated that other categorisation of the audio tracks may be determined and each category may be provided as one of the two or more selector graphics 300, 301. Categories may be based on one or more of: language; user-favorited and non user-favorited; and radio based commentary and non-radio based commentary among others. The categorisation of audio tracks may be predetermined using predetermined data, such as metadata, associated with the audio track. The categorisation of audio tracks may be performed automatically, such as by or under the control of the apparatus 100, using audio analysis techniques, such as to identify language for example.

At least one of the first selector graphic 300 and second selector graphic 301 may be presented visually associated with the focus-subject 202. In this example, as shown in Figure 3, both of the selector graphics 300, 301 are shown visually associated with the particular focus-subject 202. In particular the first selector graphic 301 is shown below the particular focus-subject 202 and the second selector graphic 302 above the particular focus-subject 202.

In one or more examples, both the first and second selector graphics 300, 301 allow for selection of audio tracks (as described above) such that the apparatus 100 provides for audible presentation to the user. The audio tracks selected on each selector graphic may be assigned a particular audio-spatial region by use of a spatial audio effect.

In one or more examples, the first selector graphic 300 comprises an audibly active selector in that audio tracks corresponding to one or more of the selector-graphic elements 302A-H provided as part of the first selector graphic 300 are audibly presented to the user; and the second selector graphic 301 comprises an audibly inactive selector in that audio tracks corresponding to the selector-graphic elements 303A-H provided as part of the second selector graphic are not audibly presented to the user (i.e. they may not be selectable while located in the second selector graphic 301). The apparatus may be configured to provide for user initiated virtual movement of the selector-graphic elements between the first and second selector-graphic elements to control their audible presentation to the user. In this example, the audio tracks represented by the selector-graphic elements on either selector graphic may or may not be categorised. Any user-input or gesture may be used to provide for virtual movement of selector-graphic elements and thereby provide for control of audible presentation to a user.

If the audio tracks are categorised, they may be so categorised initially prior to the user providing user input to virtually move the selector-graphic elements 302A-H, 303A-H between the first and second selector-graphic elements 300, 301.

In examples comprising an active selector, the audio tracks represented on said active selector may be audibly presented with a spatial audio effect corresponding to the positon of the related selector-graphic element on the selector graphic. On addition of a further selector-graphic element, such as from the second selector graphic, the apparatus may provide for audible presentation of the audio track represented by the added selector-graphic elements with a spatial audio effect such that the audio of the audio track is perceived as originating from a particular direction; and wherein the audio tracks that are already being presented that have a direction common with the particular direction are at least one of;
i) removed from audible presentation to the user in said particular direction (such as in any direction of overlap); and
ii) have a spatial audio effect applied thereto such that they are perceived as originating from a direction adjacent to the particular direction.

Accordingly, in an audio space which comprises the directions from which the spatial-audio is perceived as originating, the addition of new audio tracks may cause currently playing audio tracks to be removed or shifted in the audio space to make way for the newly added audio track. In one or more examples, the audio may be mixed together.

In examples where the ambient audio (i.e. audio track 7 in the above table) is presented over the whole audio space, i.e. from all directions, when audio tracks are added to the active selector graphic the ambient audio from a direction corresponding to the direction of the added audio track may be removed or the ambient audio may be compressed in the audio space to a direction adjacent the added audio track.

Figure 4 shows a representation 401 of directional, ambient audio of the event, in a similar manner to a selector graphic. The audio space over which the ambient audio is presented is divided into eight sectors labelled Sector 1 to Sector 8 to correspond to the selector graphic described in the above examples. The directional, ambient audio may or may not be presented in additional to non-directional audio of the event.

Figure 4 shows the selector graphic 300 with four audio tracks added thereto represented by selector-graphic elements 302A, 302C, 302E and 302G. In this example, the addition of the audio tracks has replaced the directional ambient audio in that corresponding part of the audio space. Thus, only sectors 2, 4, 6 and 8 of the directional ambient audio space are presented to the user with the ambient directional audio in the other directions or sectors replaced by the audio tracks represented by selector-graphic elements 302A, 302C, 302E and 302G.

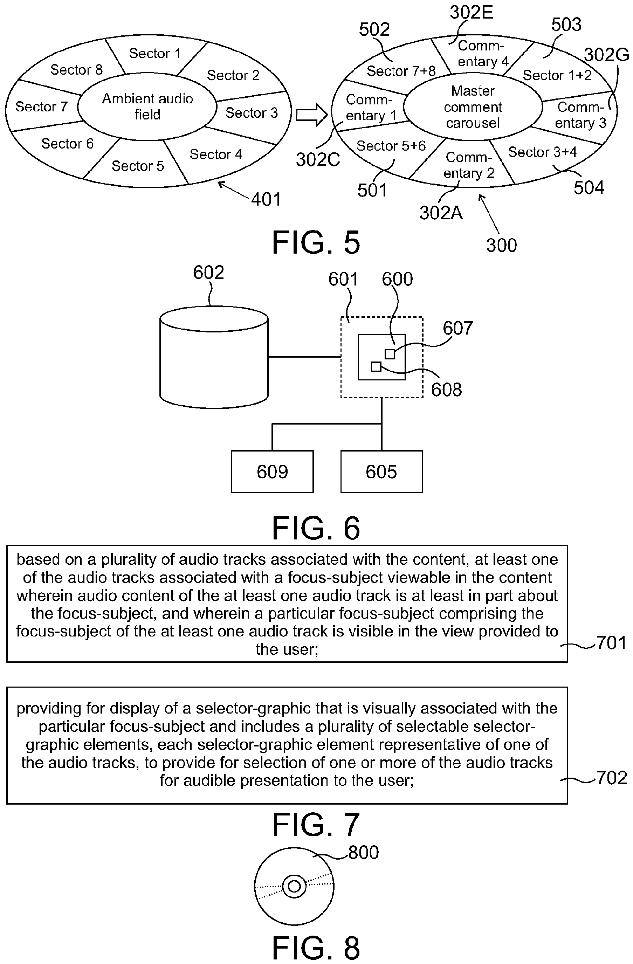

Figure 5 shows the same representation 401 of directional, ambient audio of the event.

Figure 5 shows the selector graphic 300 with four audio tracks added thereto represented by selector-graphic elements 302A, 302C, 302E and 302G. In this example, the addition of the audio tracks has compressed and shifted the directional ambient audio in that corresponding part of the audio space. Thus, the region of the audio space designated sector 5 now contains the audio track represented by selector-graphic element 302A. The directional ambient audio that was previous presented is now shifted to sector 501, which includes the ambient directional audio previously presented in sectors 5 and 6. Likewise, the addition of the audio track represented by selector-graphic element 302C has caused the ambient directional audio of sector 7 to be shifted to sector 502, which includes the ambient directional audio previously presented in sectors 7 and 8. Likewise, the addition of the audio track represented by selector-graphic element 302E has caused the ambient directional audio of sector 1 to be shifted to sector 503, which includes the ambient directional audio previously presented in sectors 1 and 2. Likewise, the addition of the audio track represented by selector-graphic element 302G has caused the ambient directional audio of sector 3 to be shifted to sector 504, which includes the ambient directional audio previously presented in sectors 3 and 4.

In the above examples, selector graphics having eight selector-graphic elements are provided or at least eight vacant spaces in which to receive selector graphic elements. However, different numbers of selector-graphic elements or vacant spaces may be provided. In one or more examples, the number of selector-graphic elements present on the selector graphic may be variable, perhaps within upper and/or lower limits, as selector-graphic elements are added and removed from the selector graphic. This may be beneficial should the position and size of the arc over which each sectorial selector-graphical element extends change. For example, if the audio tracks are presented with a spatial audio effect based on their position/size of the arc they cover on the selector graphic, then as selector-graphic elements are added and removed, the positon and size of the arc they cover on the selector graphic may correspond to the spatial audio effect applied. Accordingly, with one audio track being played, it may be provided with a spatial audio effect such that the audio track appears to originate from a direction surrounding the user, i.e. all directions. Accordingly, the selector-graphic element representing that one audio track may be shown extending all the way around the selector graphic. When a selector-graphic element is added, the selector graphic may be split such that one selector-graphic element covers one half (e.g. left half) of the selector graphic and the other selector-graphic element covers the other half (e.g. right half). Correspondingly the two audio tracks may be presented with an audio effect that corresponds in position and/or extent to the halves represented on the selector graphic.

In one or more examples, at least one or more of the audio tracks may comprise user-generated audio tracks. Accordingly, while watching the VR content, a user may be provided with means to record an audio track having a specific focus-subject. The apparatus 100 may be configured to provide such a function. In this example, the VR apparatus 101 or an apparatus (not shown) associated with the apparatus 100 may be configured to determine eye gaze direction. Accordingly, in either example, the apparatus 100 may be provided with eye gaze information. The apparatus 100 may be configured to, based on at least part of the determined eye gaze information and the video imagery, identify a focus-subject in the video imagery for associating with an audio track recorded by the user. Accordingly, while recording the audio track, the apparatus uses where the user is looking to determine the focus subject of the recorded audio track. In one or more examples, the apparatus 100 may be provided with predetermined information comprising possible focus-subjects viewable in the video imagery such that a correlation between the eye gaze direction and the predetermined information may be used to identify the focus-subject. In one or more examples, the eye gaze direction may be used alongside image analysis of the video imagery and/or frames thereof to identify the focus-subject. Alternatively, the path followed by the eye gaze may be used directly for positioning of the selector graphic.

The apparatus 100 may be configured to determine the focus-subject from the eye gaze using an average eye gaze position or a subset of the eye gaze information. In one or more examples, (possibly abrupt) changes to eye gaze over temporally short threshold time may be ignored. For example, the user recording the audio track may momentarily look away, such as toward commentary notes, which may not be indicative of a change in focus-subject. In one or more examples, semantic analysis of the audio content of the recorded audio track may be used to identify the focus-subject.

In the above example, the apparatus 100 is described as capable of recording audio tracks as well as providing for their selection. However, in one or more examples, an apparatus specifically for recording audio tracks that have an associated focus-subject may be provided, as exemplified in Figure 6.

The apparatus 600 comprises at least one processor 607 and at least one memory 608 including computer program code, the at least one memory and the computer program code configured to, with the at least one processor 607, cause the apparatus 600 to perform at least the following: based on audio provided by a user (such as via a microphone 609), and an eye gaze direction of the user while providing said audio (such as by an eye gaze tracking element 605), provide for recording of said audio to form an audio track for association with virtual reality content comprising video imagery of an event, the audio track associated with a focus-subject, the focus-subject viewable at the event and in the virtual reality content and determined from the eye gaze direction relative to one of the event and the virtual reality content of the event.

Accordingly, for a user watching the event using a VR apparatus 601 and recording an audio track the eye gaze tracking element may be built into or associated with a VR display. The VR content may be provided by store 602, similar to store 102 of Figure 1. The eye gaze tracking element 609 may track eye gaze relative to the VR view provided to the user via the VR display. If the user is watching the event live, the VR apparatus 601 may not be present and item 605 represents an eye gaze tracking element that tracks eye gaze relative to the real world in front of the user.

Thus, the apparatus 600 may use eye gaze at the live event occurring in front of the user or the eye gaze of the user watching a VR content representation of the event (whether live or recorded). The direction of the eye gaze of the user is used to identify an object, person or occurrence that may comprise the focus-subject of the audio track. Accordingly, the apparatus may provide for the audio track to be associated with the focus-subject. The audio track with its associated focus-subject may then be used with the apparatus 100 which provides for selection of audio tracks as discussed above.

The gaze direction may be used to identify which spatial part of the real world or VR content recorded thereof the user was looking at while recording the audio track. The apparatus may be configured to identify the focus-subject from the gaze direction in many different ways, such as by image recognition, using data that provides the positon of things at the event or by directional audio analysis among others. Also, the way the focus-subject is recorded with the audio tracks may be achieved in many different ways, such as by way of simple coordinates of its movement in the video imagery, by name, by shape or area, by an identification code which can be referenced against other data, among others. In one or more examples, the apparatus 600 may provide for visual identification of objects, people or occurrences whose position in the video imagery correlates with the gaze direction. For example, the movement of a person identified by image analysis may correlate with movement of the gaze direction and it may be concluded that the audio of the user is about that person. In one or more examples, the apparatus may provide for audio analysis of directional audio to identify the direction of one or more sounds and correlation between the gaze direction and the one or more sounds may provide for the identification of an object, person or occurrences as the focus-subject. For example, an exchange between two actors may provide two slightly separated sound sources and correlation between the sound sources and the gaze direction may identify the exchange between the actors, i.e. an "occurrence" of a verbal exchange, as the focus-subject. For example, objects and/or persons may be provided with positioning devices such that their location in the video imagery is determinable and the apparatus may provide for identification of objects, people or occurrences whose position in the video imagery, from the positioning devices, correlates with the gaze direction.

In all of the above examples, a user may not fix their gaze on a same person, object or occurrence for the whole time they are recording the audio track and therefore the apparatus may be caused to identify an object, person or occurrence in the video imagery as the focus-subject based on a threshold time (or proportion of a total time that audio is provided) that the gaze direction falls upon that object, person or occurrence. Thus the apparatus may determine which object, person or occurrence is watched for the most time or above a threshold time while recording the audio tracks and that object, person or occurrence may be deduced to be the focus-subject. The focus-subject assigned by the apparatus 600 may be editable by the user.

Figure 7 shows a flow diagram illustrating the steps of based on 701 a plurality of audio tracks associated with the content, at least one of the audio tracks associated with a focus-subject viewable in the content wherein audio content of the at least one audio track is at least in part about the focus-subject, and wherein a particular focus-subject comprising the focus-subject of the at least one audio track is visible in the view provided to the user; providing 702 for display of a selector-graphic in the view that is visually associated with the particular focus-subject and includes a plurality of selectable selector-graphic elements, each selector-graphic element representative of one of the audio tracks, to provide for selection of one or more of the audio tracks for audible presentation to the user.

Figure 8 illustrates schematically a computer/processor readable medium 800 providing a program according to an example. In this example, the computer/processor readable medium is a disc such as a digital versatile disc (DVD) or a compact disc (CD). In other examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping the device. Thus the selector graphics may be rotated by any of the above gestures or other user inputs and the selector-graphic elements may be moveable between selector graphics by way of any of the above gestures or other user inputs.

The apparatus shown in the above examples may be part of a VR apparatus, AR apparatus, part of a VR content capture device, a portable electronic device, a laptop computer, a mobile phone, a Smartphone, a tablet computer, a personal digital assistant, a digital camera, a smartwatch, a non-portable electronic device, a desktop computer, a monitor, wearable apparatus, a smart TV, a server, or a module/circuitry for one or more of the same.

Any mentioned apparatus/device/server and/or other features of particular mentioned apparatus/device/server may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus/device/server may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

## Claims

1. An apparatus comprising:
at least one processor; and
at least one memory including computer program code,
the at least one memory and the computer program code configured to, with the at least one processor, cause the apparatus to perform at least the following:
provide a view to a user for viewing content comprising video imagery of an event;
**characterised in that** the apparatus is further caused to receive information on a plurality of audio tracks associated with the content at least one of the audio tracks associated with a focus-subject viewable in the content wherein audio content of the at least one audio track is at least in part about the focus-subject, and wherein a particular focus-subject comprising the focus-subject of the at least one audio track is visible in the view provided to the user;
provide for display of a selector-graphic for selection of one or more of the audio tracks for audible presentation to the user, wherein the selector-graphic is visually associated with the particular focus-subject and includes at least one selectable selector-graphic element, the or each selector-graphic element representative of one of the audio tracks including the audio track associated with the particular focus-subject.

2. The apparatus of claim 1, wherein the focus-subject comprises one or more of a person, object or occurrence appearing in the video imagery.

3. The apparatus of claim 1 or claim 2, wherein the apparatus is caused to provide, based on the particular focus-subject, for determination of which of the plurality of audio tracks have a focus-subject that comprises the particular focus-subject and provide for display of selectable selector-graphic elements for a subset of the plurality of audio tracks comprising at least those determined audio tracks and wherein the subset excludes those audio tracks that are associated with a focus-subject that is not the particular focus-subject.

4. The apparatus of claim 3, wherein the subset includes one or more audio tracks of the plurality of audio tracks that are not associated with a focus-subject.

5. The apparatus of any preceding claim, wherein the selector graphic is displayed as a ring that surrounds the focus-subject and the selector-graphic element comprise a sector of the ring.

6. The apparatus of any preceding claim, wherein the apparatus is caused to provide for selection of one or more of the audio tracks for audible presentation to the user on virtual rotation of the selector graphic, the orientation of the selector graphic and therefore the orientation of the selector graphic elements determinative of the audio track for audible presentation to the user.

7. The apparatus of any preceding claim, wherein the apparatus is caused to provide for automatic changing of a current playing audio track represented by one of the selector-graphic elements to another audio track represented by one of the selector-graphic elements based on determination that an audio volume level of the current audio track is below a predetermined volume threshold for longer than a predetermined period of time.

8. The apparatus of any preceding claim, wherein the relative arrangement of the selector-graphic elements of the selector graphic corresponds to a spatial audio effect applied to the audio tracks represented by the selector-graphic elements.

9. The apparatus of any preceding claim, wherein the apparatus is caused to provide for display of the selector-graphic, comprising a first selector-graphic, in the view and a second selector-graphic in the view that is also visually associated with the particular focus-subject and includes a plurality of selectable selector-graphic elements, each selector-graphic element representative of one of the audio tracks; wherein
the first selector graphic comprises an audibly active selector in that audio tracks corresponding to one or more of the selector-graphic elements provided as part of the first selector graphic are audibly presented to the user; and the second selector graphic comprises an audibly inactive selector in that audio tracks corresponding to the selector-graphic elements provided as part of the second selector graphic are not audibly presented to the user; and wherein the apparatus is caused to provide for user initiated virtual movement of the selector- graphic elements between the first and second selector-graphic elements to control their audible presentation to the user.

10. The apparatus of claim 9, wherein
the first selector-graphic comprises, at least initially, selector-graphic elements representative of audio tracks of a first categorized type; and
the second selector-graphic includes selector-graphic elements representative of audio tracks of a second categorized type.

11. The apparatus of claim 9 or claim 10, wherein the apparatus provides for audible presentation of ambient sounds from the event and based on movement of a selected one of the selector-graphic elements of the second selector graphic to place it within the first selector graphic, provide for audible presentation of the audio track represented by the selected one of the selector-graphic elements with a spatial audio effect such that the audio of the audio track is perceived as originating from a particular direction; and
wherein the ambient sounds that have a direction common with the particular direction are at least one of;
i) removed from audible presentation to the user;
ii) have a spatial audio effect applied thereto such that they are perceived as originating from a direction adjacent to the particular direction.

12. The apparatus of any preceding claim, wherein the apparatus is caused to provide for recording of a user audio track for association with the content based on audio provided by the user who is provided with the view, the apparatus caused to identify the focus-subject of the user audio track based on a determined eye gaze direction and the view provided to the user.

13. An apparatus comprising:
at least one processor; and
at least one memory including computer program code **characterised in that**
the at least one memory and the computer program code configured to, with the at least one processor, cause the apparatus to perform at least the following:
based on audio provided by a user and an eye gaze direction of the userwhile providing said audio;
provide for recording of said audio to form an audio track for association with content comprising video imagery of an event, the audio track associated with a focus-subject, the focus-subject viewable at the event and in the content and determined from the eye gaze direction relative to one of the event and the content of the event.

14. A method comprising,
providing a view to a user for viewing content comprising video imagery of an event **characterised in that** the method further comprises:
receiving information on a plurality of audio tracks associated with the content, at least one of the audio tracks associated with a focus-subject viewable in the content wherein audio content of the at least one audio track is at least in part about the focus subject, and wherein a particular focus-subject comprising the focus-subject of the at least one audio track is visible in the view provided to the user;
providing for display of a selector-graphic for selection of one or more of the audio tracks for audible presentation to the user, wherein the selector-graphic is visually associated with the particular focus-subject and includes at least one selectable selector-graphic element, the or each selector-graphic element representative of one of the audio tracks including the audio track associated with the particular focus-subject.

15. A computer readable medium comprising instructions which, when executed by a computer, cause the computer to carry out the method of claim 14.

## Patentansprüche

1. Vorrichtung, die Folgendes umfasst:
mindestens einen Prozessor und
mindestens einen Speicher, der einen Computerprogrammcode beinhaltet,
wobei der mindestens eine Speicher und der Computerprogrammcode dazu ausgelegt sind, mit dem mindestens einen Prozessor zu bewirken, dass die Vorrichtung mindestens Folgendes durchführt:
Bereitstellen einer Ansicht für einen Benutzer zum Ansehen eines Inhalts, der Videobilder von einem Ereignis umfasst;
**dadurch gekennzeichnet, dass** bewirkt wird, dass die Vorrichtung ferner Folgendes durchführt
Empfangen von Informationen über eine Vielzahl von Audiospuren, die mit dem Inhalt verknüpft sind, wobei mindestens eine der Audiospuren mit einem Fokussubjekt verknüpft ist, das im Inhalt sichtbar ist, wobei sich ein Audioinhalt der mindestens einen Audiospur mindestens teilweise auf das Fokussubjekt bezieht und wobei ein spezielles Fokussubjekt, das das Fokussubjekt der mindestens einen Audiospur umfasst, in der Ansicht, die dem Benutzer bereitgestellt wird, sichtbar ist;
Bereitstellen einer Auswahlgrafik zur Anzeige zum Auswählen von einer oder mehreren der Audiospuren zur akustischen Präsentation für den Benutzer, wobei die Auswahlgrafik optisch mit dem speziellen Fokussubjekt verknüpft ist und mindestens ein auswählbares Auswahlgrafikelement beinhaltet, wobei das oder jedes Auswahlgrafikelement eine der Audiospuren repräsentiert, die die Audiospur beinhalten, die mit dem speziellen Fokussubjekt verknüpft ist.

2. Vorrichtung nach Anspruch 1, wobei das Fokussubjekt eines oder mehreres von einer Person, einem Objekt oder einem Vorkommnis, die bzw. das in den Videobildern erscheint, umfasst.

3. Vorrichtung nach Anspruch 1 oder Anspruch 2, wobei bewirkt wird, dass die Vorrichtung auf Basis des speziellen Fokussubjekts eine Bestimmung bereitstellt, welche der Vielzahl von Audiospuren ein Fokussubjekt aufweisen, das das spezielle Fokussubjekt umfasst, und eine Anzeige von auswählbaren Auswahlgrafikelementen für einen Untersatz der Vielzahl von Audiospuren, die mindestens diese bestimmten Audiospuren umfassen, bereitstellt, und wobei der Untersatz jene Audiospuren ausschließt, die mit einem Fokussubjekt verknüpft sind, das nicht das spezielle Fokussubjekt ist.

4. Vorrichtung nach Anspruch 3, wobei der Untersatz eine oder mehrere Audiospuren der Vielzahl von Audiospuren beinhaltet, die nicht mit einem Fokussubjekt verknüpft sind.

5. Vorrichtung nach einem der vorhergehenden Ansprüche, wobei die Auswahlgrafik als ein Ring angezeigt wird, der das Fokussubjekt umgibt, und das Auswahlgrafikelement einen Abschnitt des Rings umfassen.

6. Vorrichtung nach einem der vorhergehenden Ansprüche, wobei bewirkt wird, dass die Vorrichtung durch eine virtuelle Drehung der Auswahlgrafik eine Auswahl von einer oder mehreren der Audiospuren zur akustischen Präsentation für den Benutzer bereitstellt, wobei die Ausrichtung der Auswahlgrafik und daher die Ausrichtung der Auswahlgrafikelemente die Audiospur für eine akustische Präsentation für den Benutzer bestimmt.

7. Vorrichtung nach einem der vorhergehenden Ansprüche, wobei bewirkt wird, dass die Vorrichtung ein automatisches Wechseln von einer derzeit wiedergegebenen Audiospur, die durch eines der Auswahlgrafikelemente repräsentiert wird, zu einer anderen Audiospur, die durch eines der Auswahlgrafikelemente repräsentiert wird, auf Basis einer Bestimmung, dass ein Audiolautstärkepegel der aktuellen Audiospur für länger als eine vorbestimmte Zeitperiode unter einem vorbestimmten Lautstärkeschwellwert liegt, bereitstellt.

8. Vorrichtung nach einem der vorhergehenden Ansprüche, wobei die relative Anordnung der Auswahlgrafikelemente der Auswahlgrafik einem räumlichen Audioeffekt entspricht, der auf die Audiospuren angewendet wird, die durch die Auswahlgrafikelemente repräsentiert werden.

9. Vorrichtung nach einem der vorhergehenden Ansprüche, wobei bewirkt wird, dass die Vorrichtung eine Anzeige der Auswahlgrafik, die eine erste Auswahlgrafik umfasst, in der Ansicht und einer zweiten Auswahlgrafik in der Ansicht, die ebenfalls mit dem speziellen Fokussubjekt verknüpft ist und eine Vielzahl von auswählbaren Auswahlgrafikelementen beinhaltet, bereitstellt, wobei jedes Auswahlgrafikelement für eine der Audiospuren repräsentativ ist; wobei
die erste Auswahlgrafik einen akustisch aktiven Auswähler umfasst, in dem dem Benutzer Audiospuren, die einem oder mehreren der Auswahlgrafikelemente entsprechen, die als Teil der ersten Auswahlgrafik bereitgestellt werden, akustisch präsentiert werden; und die zweite Auswahlgrafik einen akustisch inaktiven Auswähler umfasst, in dem Audiospuren, die den Auswahlgrafikelementen entsprechen, die als Teil der zweiten Auswahlgrafik bereitgestellt werden, dem Benutzer nicht akustisch präsentiert werden und wobei bewirkt wird, dass die Vorrichtung eine von einem Benutzer initiierte virtuelle Bewegung der Auswahlgrafikelemente zwischen den ersten und den zweiten Auswahlgrafikelementen, um deren akustische Präsentation für den Benutzer zu steuern, bereitstellt.

10. Vorrichtung nach Anspruch 9, wobei
die erste Auswahlgrafik mindestens anfänglich Auswahlgrafikelemente umfasst, die für Audiospuren eines ersten kategorisierten Typs repräsentativ sind; und
die zweite Auswahlgrafik Auswahlgrafikelemente beinhaltet, die für Audiospuren eines zweiten kategorisierten Typs repräsentativ sind.

11. Vorrichtung nach Anspruch 9 oder Anspruch 10, wobei die Vorrichtung eine akustische Präsentation von Umgebungsgeräuschen vom Ereignis bereitstellt und auf Basis einer Bewegung eines ausgewählten der Auswahlgrafikelemente der zweiten Auswahlgrafik, um es in der ersten Auswahlgrafik zu platzieren, eine akustische Präsentation der Audiospur, die durch das ausgewählte eine der Auswahlgrafikelemente repräsentiert wird, mit einem räumlichen Audioeffekt bereitstellen, derart, dass das Audio der Audiospur derart wahrgenommen wird, dass es aus einer speziellen Richtung kommt; und
wobei die Umgebungsgeräusche, die eine mit der speziellen Richtung gemeinsame Richtung aufweisen, mindestens eines von Folgendem sind;
i) aus der akustischen Präsentation für den Benutzer entfernt;
ii) einen räumlichen Audioeffekt aufweisen, der derart auf sie angewendet wird, dass sie derart wahrgenommen werden, dass sie aus einer Richtung kommen, die der speziellen Richtung benachbart ist.

12. Verfahren nach einem der vorhergehenden Ansprüche, wobei bewirkt wird, dass die Vorrichtung eine Aufzeichnung einer Benutzeraudiospur zur Verknüpfung mit dem Inhalt auf Basis von Audio, das dem Benutzer bereitgestellt wird, dem die Ansicht bereitgestellt wird, bereitstellt, wobei bewirkt wird, dass die Vorrichtung das Fokussubjekt der Benutzeraudiospur auf Basis einer Blickrichtung und der dem Benutzer bereitgestellten Ansicht identifiziert.

13. Vorrichtung, die Folgendes umfasst:
mindestens einen Prozessor und
mindestens einen Speicher, der einen Computerprogrammcode beinhaltet, **dadurch gekennzeichnet, dass**
der mindestens eine Speicher und der Computerprogrammcode dazu ausgelegt sind, mit dem mindestens einen Prozessor zu bewirken, dass die Vorrichtung mindestens Folgendes durchführt:
auf Basis von Audio, das von einem Benutzer bereitgestellt wird, und einer Blickrichtung des Benutzers, während er das Audio bereitstellt;
Bereitstellen einer Aufzeichnung des Audios, um eine Audiospur zur Verknüpfung mit einem Inhalt, der Videobilder eines Ereignisses umfasst, zu bilden, wobei die Audiospur mit einem Fokussubjekt verknüpft ist, wobei das Fokussubjekt am Ereignis und im Inhalt sichtbar ist und anhand der Blickrichtung relativ zu einem des Ereignisses und des Inhalts des Ereignisses bestimmt wird.

14. Verfahren, das Folgendes umfasst,
Bereitstellen einer Ansicht für einen Benutzer zum Ansehen eines Inhalts, der Videobilder von einem Ereignis umfasst, **dadurch gekennzeichnet, dass** das Verfahren ferner Folgendes umfasst:
Empfangen von Informationen über eine Vielzahl von Audiospuren, die mit dem Inhalt verknüpft sind, wobei mindestens eine der Audiospuren mit einem Fokussubjekt verknüpft ist, das im Inhalt sichtbar ist, wobei sich ein Audioinhalt der mindestens einen Audiospur mindestens teilweise auf das Fokussubjekt bezieht und wobei ein spezielles Fokussubjekt, das das Fokussubjekt der mindestens einen Audiospur umfasst, in der Ansicht, die dem Benutzer bereitgestellt wird, sichtbar ist;
Bereitstellen einer Auswahlgrafik zur Anzeige zum Auswählen von einer oder mehreren der Audiospuren zur akustischen Präsentation für den Benutzer, wobei die Auswahlgrafik optisch mit dem speziellen Fokussubjekt verknüpft ist und mindestens ein auswählbares Auswahlgrafikelement beinhaltet, wobei das oder jedes Auswahlgrafikelement eine der Audiospuren repräsentiert, die die Audiospur beinhaltet, die mit dem speziellen Fokussubjekt verknüpft ist.

15. Computerlesbares Medium, das Anweisungen umfasst, die, wenn sie von einem Computer ausgeführt werden, bewirken, dass der Computer das Verfahren nach Anspruche 14 umsetzt.

## Revendications

1. Appareil comprenant :
au moins un processeur ; et
au moins une mémoire comportant un code de programme informatique,
l'au moins une mémoire et le code de programme informatique étant configurés pour, avec l'au moins un processeur, amener l'appareil à réaliser au moins les étapes suivantes :
fournir une vue à un utilisateur pour visualiser un contenu comprenant une imagerie vidéo d'un événement ;
**caractérisé en ce que** l'appareil est en outre amené à
recevoir des informations sur une pluralité de pistes audio associées au contenu, au moins une des pistes audio étant associée à un sujet principal pouvant être visualisé dans le contenu, dans lequel un contenu audio de l'au moins une piste audio concerne au moins en partie le sujet principal, et dans lequel un sujet principal particulier comprenant le sujet principal de l'au moins une piste audio est visible dans la vue fournie à l'utilisateur ;
prévoir l'affichage d'un graphique de sélecteur pour la sélection d'une ou plusieurs des pistes audio pour une présentation audible à l'utilisateur, dans lequel le graphique de sélecteur est visuellement associé au sujet principal particulier et comporte au moins un élément de graphique de sélecteur sélectionnable, l'élément ou chaque élément de graphique de sélecteur étant représentatif de l'une des pistes audio comportant la piste audio associée au sujet principal particulier.

2. Appareil selon la revendication 1, dans lequel le sujet principal comprend un ou plusieurs parmi une personne, un objet ou une occurrence apparaissant dans l'imagerie vidéo.

3. Appareil selon la revendication 1 ou la revendication 2, dans lequel l'appareil est amené à prévoir, sur la base du sujet principal particulier, la détermination des pistes audio parmi la pluralité de pistes audio qui ont un sujet principal qui comprend le sujet principal particulier, et à prévoir l'affichage d'éléments de graphique de sélecteur sélectionnables pour un sous-ensemble de la pluralité de pistes audio comprenant au moins ces pistes audio déterminées, et dans lequel le sous-ensemble exclut celles des pistes audio qui sont associées à un sujet principal qui n'est pas le sujet principal particulier.

4. Appareil selon la revendication 3, dans lequel le sous-ensemble comporte une ou plusieurs pistes audio de la pluralité de pistes audio qui ne sont pas associées à un sujet principal.

5. Appareil selon l'une quelconque des revendications précédentes, dans lequel le graphique de sélecteur est affiché sous la forme d'un anneau qui entoure le sujet principal, et l'élément de graphique de sélecteur comprend un secteur de l'anneau.

6. Appareil selon l'une quelconque des revendications précédentes, dans lequel l'appareil est amené à prévoir la sélection d'une ou plusieurs des pistes audio pour une présentation audible à l'utilisateur sur rotation virtuelle du graphique de sélecteur, l'orientation de graphique de sélecteur, et donc l'orientation d'éléments de graphique de sélecteur, déterminant la piste audio pour une présentation audible à l'utilisateur.

7. Appareil selon l'une quelconque des revendications précédentes, dans lequel l'appareil est amené à prévoir un changement automatique d'une piste audio en cours de lecture représentée par un des éléments de graphique de sélecteur en une autre piste audio représentée par un des éléments de graphique de sélecteur, sur la base de la détermination qu'un niveau de volume audio de la piste audio en cours reste en dessous d'un seuil de volume prédéterminé pendant plus longtemps qu'une période de temps prédéterminée.

8. Appareil selon l'une quelconque des revendications précédentes, dans lequel l'agencement relatif des éléments de graphique de sélecteur du graphique de sélecteur correspond à un effet audio spatial appliqué aux pistes audio représentées par les éléments de graphique de sélecteur.

9. Appareil selon l'une quelconque des revendications précédentes, dans lequel l'appareil est amené à prévoir l'affichage du graphique de sélecteur, comprenant un premier graphique de sélecteur dans la vue, et un deuxième graphique de sélecteur dans la vue qui est également visuellement associé au sujet principal particulier, et comporte une pluralité d'éléments de graphique de sélecteur sélectionnables, chaque élément de graphique de sélecteur étant représentatif de l'une des pistes audio ; dans lequel
le premier graphique de sélecteur comprend un sélecteur actif de manière audible, où les pistes audio correspondant à un ou plusieurs des éléments de graphique de sélecteur fournis dans le cadre du premier graphique de sélecteur sont présentées de manière audible à l'utilisateur ; et le deuxième graphique de sélecteur comprend un sélecteur inactif de manière audible, où les pistes audio correspondant aux éléments de graphique de sélecteur fournis dans le cadre du deuxième graphique de sélecteur ne sont pas présentées de manière audible à l'utilisateur ; et dans lequel l'appareil est amené à prévoir un déplacement virtuel, initié par l'utilisateur, des éléments de graphique de sélecteur entre les premier et deuxième éléments de graphique de sélecteur, pour commander leur présentation audible à l'utilisateur.

10. Appareil selon la revendication 9, dans lequel
le premier graphique de sélecteur comprend, au moins initialement, des éléments de graphique de sélecteur représentatifs de pistes audio d'un premier type classé ; et
le deuxième graphique de sélecteur comporte des éléments de graphique de sélecteur représentatifs de pistes audio d'un deuxième type classé.

11. Appareil selon la revendication 9 ou la revendication 10, dans lequel l'appareil prévoit une présentation audible de sons ambiants provenant de l'événement et, sur la base d'un déplacement d'un élément de graphique de sélecteur sélectionné parmi les éléments de graphique de sélecteur du deuxième graphique de sélecteur pour le placer à l'intérieur du premier graphique de sélecteur, prévoit une présentation audible de la piste audio représentée par celui sélectionné des éléments de graphique de sélecteur avec un effet audio spatial, de sorte que l'audio de la piste audio soit perçu comme provenant d'une direction particulière ; et
dans lequel les sons ambiants qui ont une direction commune avec la direction particulière sont au moins dans l'un des cas suivants :
i) retirés de la présentation audible à l'utilisateur ;
ii) se voient appliquer un effet audio spatial de sorte à être perçus comme provenant d'une direction adjacente à la direction particulière.

12. Appareil selon l'une quelconque des revendications précédentes, dans lequel l'appareil est amené à prévoir un enregistrement d'une piste audio d'utilisateur à associer avec le contenu sur la base de l'audio fourni par l'utilisateur qui est pourvu de la vue, l'appareil est amené à identifier le sujet principal de la piste audio d'utilisateur sur la base d'une direction déterminée du regard, et de la vue fournie à l'utilisateur.

13. Appareil comprenant :
au moins un processeur ; et
au moins une mémoire comportant un code de programme informatique, **caractérisé en ce que**
l'au moins une mémoire et le code de programme informatique sont configurés pour, avec l'au moins un processeur, amener l'appareil à réaliser au moins les étapes suivantes :
sur la base d'un audio fourni par un utilisateur et d'une direction du regard de l'utilisateur lors de la fourniture dudit audio :
prévoir l'enregistrement dudit audio pour former une piste audio à associer à un contenu comprenant une imagerie vidéo d'un événement, la piste audio étant associée à un sujet principal, le sujet principal pouvant être visualisé lors de l'événement et dans le contenu, et déterminé à partir de la direction du regard par rapport à l'un parmi l'événement et le contenu de l'événement.

14. Procédé comprenant,
la fourniture d'une vue à un utilisateur pour visualiser un contenu comprenant une imagerie vidéo d'un événement, **caractérisé en ce que** le procédé comprend en outre les étapes suivantes :
recevoir des informations sur une pluralité de pistes audio associées au contenu, au moins une des pistes audio étant associée à un sujet principal pouvant être visualisé dans le contenu, dans lequel un contenu audio de l'au moins une piste audio concerne au moins en partie le sujet principal, et dans lequel un sujet principal particulier comprenant le sujet principal de l'au moins une piste audio est visible dans la vue fournie à l'utilisateur ;
prévoir un affichage d'un graphique de sélecteur pour la sélection d'une ou plusieurs des pistes audio pour une présentation audible à l'utilisateur, dans lequel le graphique de sélecteur est visuellement associé au sujet principal particulier et comporte au moins un élément de graphique de sélecteur sélectionnable, l'élément ou chaque élément de graphique de sélecteur étant représentatif de l'une des pistes audio comportant la piste audio associée au sujet principal particulier.

15. Support lisible par ordinateur comprenant des instructions qui, lorsqu'elles sont exécutées par un ordinateur, amènent l'ordinateur à effectuer le procédé selon la revendication 14.
